# EUROPÄISCHE PATENTSCHRIFT

(11) **EP 2 926 879 B1**
(45) Veröffentlichungstag und Bekanntmachung des Hinweises auf die Patenterteilung: **27.09.2017**
(21) Anmeldenummer: 14163350.3
(22) Anmeldetag: 03.04.2014
(51) Int. Cl.: B01D 33/17, B01D 33/19

(54) **Filtervorrichtung und Filtrationsverfahren**
Filtration method and filter device
Dispositif de filtre et procédé de filtration

(43) Veröffentlichungstag der Anmeldung: 07.10.2015
(73) Patentinhaber: BOKELA Ingenieurgesellschaft für Mechanische Verfahrenstechnik mbH, 76131 Karlsruhe (DE)
(72) Erfinder: BOTT, Reinhard, 76337 Waldbronn (DE); LANGELOH, Thomas, 69242 Mühlhausen (DE)
(74) Vertreter: Wunderlich, Rainer

(56) Entgegenhaltungen:
- CN-U- 203 183 794
- DE-A1- 2 015 089
- DE-B- 1 102 105
- US-A- 2 818 177
- US-A- 3 361 262

## Beschreibung

Die Erfindung betrifft eine Filtervorrichtung mit einem Grundrahmen, einem im Wesentlichen horizontalen, scheibenförmigen Filterteller, welcher drehend antreibbar auf dem Grundrahmen gelagert ist, eine Vielzahl von scheibensegmentförmigen Filterzellen und eine Tellernabe aufweist, an welcher die Filterzellen zum Ableiten von Filtrat an Einlauföffnungen der Tellernabe angeschlossen sind, einem Steuerkopf, welcher mit Kanälen zum Abführen von Filtrat aus der Filternabe versehen ist, wobei der Steuerkopf drehfest und axial bewegbar unterhalb der Tellernabe angeordnet ist und dicht an einer Unterseite der Tellernabe anliegt, und einem Druckgehäuse gemäß dem Oberbegriff des Anspruchs 1.

Die Erfindung betrifft weiterhin ein Filtrationsverfahren unter Verwendung einer derartigen Filtervorrichtung.

Eine derartige Filtervorrichtung ist auch als ein sogenannter Plandrehfilter oder Tellerfilter bekannt und geht beispielsweise aus der DE 2015 089 A1 hervor. Der horizontale Filterteller ist üblicherweise zur Aufnahme von in großen Mengen anfallendem Filtergut ausgelegt, so dass bekannte Plandrehfilter relativ große Durchmesser aufweisen. Das Filtergut wird üblicherweise als Suspension auf den drehenden Filterteller aufgebracht, wobei dieser mit scheibensegmentförmigen Filterzellen versehen ist und verschiedene Behandlungsstationen durchläuft. Über einen Unterdruck in den Kammern des Filtertellers, welcher über einen sillstehenden Steuerkopf mit entsprechenden Verbindungsöffnungen zu einer Tellernabe des Filtertellers übertragen wird, wird Flüssigkeit aus dem Filtergut durch ein auf den Filterteller aufgebrachtes Filtermedium als Filtrat abgeführt. Der Filterteller ist von einem Druckgehäuse umgeben. Der außerhalb des Druckgehäuses befindliche Steuerkopf wird mittels einer Feder von unten gegen eine Verschleißplatte gedrückt.

Das entfeuchtete Filtergut bildet einen Filterkuchen, welcher über eine Abtragseinrichtung an einer Abtragsstation vom Filterteller entfernt wird. Anschließend kann die einzelne Filterzelle in einem kontinuierlichen Prozess durch die fortlaufende Drehung des Filtertellers einen neuen Behandlungszyklus durchlaufen.

Weitere Tellerfilter mit einem im Wesentlichen ebenen Filterteller, von welchem ein Filterkuchen mittels einer radial gerichteten Förderschnecke abnehmbar ist, gehen aus der CN 203 183 794 U, US 2 818 177 A und der U 3,361 262 A hervor. Diese weisen jeweils einen axial festen Steuerkopf in einem Druckgehäuse auf.

Der Erfindung liegt die **Aufgabe** zugrunde, eine gattungsgemäße Filtervorrichtung weiterzubilden, so dass eine besonders effiziente Filtration durchführbar ist.

Die Aufgabe wird nach der Erfindung durch eine Filtervorrichtung mit den Merkmalen des Anspruchs 1 gelöst. Bevorzugte Ausführungsformen der Erfindung sind in den abhängigen Ansprüchen angegeben. Weiterhin wird durch die Erfindung auch ein Filtrationsverfahren unter Verwendung der erfindungsgemäßen Filtervorrichtung ermöglicht.

Die erfindungsgemäße Filtervorrichtung ist unter anderem dadurch gekennzeichnet, dass das Druckgehäuse den Filterteller und den Steuerkopf druckdicht umschließt, und dass ein Druckaggregat vorgesehen ist, mit welchem in dem Druckgehäuse ein Überdruck einstellbar ist.

Ein Grundgedanke der Erfindung liegt darin, die Filtervorrichtung ungeachtet der relativ großen Dimensionen eines Filtertellers insgesamt mit einem Druckgehäuse zu versehen. In dem Druckgehäuse kann somit am Filterteller ein Überdruck eingestellt werden, welcher höher als der übliche Atmosphärendruck ist. Hierdurch lässt sich effizient ein nahezu beliebiger Differenzdruck zwischen der Oberseite des Filtertellers und dem Innenraum der einzelnen Filterzellen einstellen. Im Steuerkopf kann Atmosphärendruck, ein gegenüber dem Überdruck im Druckgehäuse niedrigerer Überdruck oder ein Unterdruck herrschen. Insbesondere erlaubt das Druckgehäuse nunmehr die Einstellung relativ hoher Drücke von vorzugsweise 2 bar bis 10 bar, und in Einzelfällen sogar deutlich höher, so dass eine effiziente Filtration des Filtergutes ermöglicht wird.

Eine bevorzugte Weiterbildung der Erfindung besteht darin, dass die Filterzellen für eine Einzelmontage selbsttragend ausgebildet und leicht lösbar an der Tellernabe befestigt sind. Dies erlaubt einen vereinfachten Aufbau und auch einen Abbau für eventuelle Wartungszwecke einzelner Filterzellen, auch wenn die Filtervorrichtung mit einem druckdichten Gehäuse umschlossen ist.

Besonders bevorzugt ist es nach einer Weiterbildung vorgesehen, dass die Filterzellen wannenförmig ausgebildet sind und entlang ihrer radialen Umfangskante Tragprofile aufweisen. Die Tragprofile können insbesondere ein selbsttragendes festes Traggestell bilden, in welchem die wannenförmige Kammer der Filterzelle aufgenommen ist. Somit weist jede Filterzelle ihre eigenen Boden- und Seitenwände auf. Eine Oberseite der wannenförmigen, segmentartigen Filterzelle ist von einem Filtermedium zur Bildung der Trennfläche abgedeckt. Das Filtermedium kann beliebig ausgebildet sein und ist insbesondere ein Filtertuch.

Ein besonders gutes Ableiten von Filtrat wird nach einer erfindungsgemäßen Ausführungsform dadurch erreicht, dass die Filterzellen einen zur Tellernabe geneigten Boden aufweisen, welcher zum Bilden wenigstens einer Ablaufrinne im Querschnitt in Umfangsrichtung geneigte Bodenflächen aufweist. Es werden so eine oder mehrere Ablaufrinnen am Boden der wannenförmigen Filterzelle gebildet, welche in radialer Richtung zur Tellernabe hin geneigt sind. Zum verbesserten Abführen von Filtrat, welches noch einen gewissen Anteil von feinen Feststoffpartikeln aufweisen kann, kann auch eine Spüleinrichtung vorgesehen sein, welche sich radial von der Tellernabe innerhalb der kammerartigen Filterzelle erstreckt.

Bekannte Plandrehfilter weisen eine relativ geringe Anzahl von Filterzellen auf, welche zwischen sechs bis zwölf liegen. Eine vorteilhafte Ausführungsform der Erfindung wird dadurch erreicht, dass mindestens 24 Filterzellen, vorzugsweise 36 Filterzellen, zum Bilden des Filtertellers vorgesehen sind. Dadurch wird erreicht, dass die scheibensegmentförmigen Filterzellen sehr schmal gehalten sind. Dies erlaubt eine vereinfachte Handhabung und insbesondere einen vereinfachten Ein- oder Ausbau der Filterzellen aus dem Druckgehäuse.

Gemäß einer weiteren Ausführungsform der Erfindung ist es bevorzugt, dass das Druckgehäuse mindestens eine druckdicht verschließbare Öffnung aufweist, durch welche einzelne Filterzellen ein- und ausführbar sind. Das Druckgehäuse ist dabei vorzugsweise ein Stahlgehäuse, welches zur Vermeidung von Druckverlusten mit druckdicht verschließbaren Türöffnungen oder Druckschleusen versehen ist.

Eine besonders bevorzugte Ausführungsform besteht darin, dass das Druckgehäuse etwa zylindrisch mit einem Durchmesser der größer ist als der Filtertellerdurchmesser, vorzugsweise bis zu 20 m oder größer, mit einer trommelförmigen Umfangswand, einem Boden und einer Decke ausgebildet ist, und dass in dem Boden und/oder der Decke die druckdicht verschließbare Öffnung angeordnet ist. Vorzugsweise kann insbesondere im Boden und in der Decke eine druckdicht verschließbare Tür vorgesehen sein. Diese Öffnung ist dabei so ausgebildet, dass eine einzelne selbsttragende Filterzelle durch diese Öffnung in oder aus dem Druckgehäuse transportierbar ist. Die einzelnen Filterzellen sind dabei lösbar an der Tellernabe und den umgebenden Filterzellen befestigt. Insbesondere sind Schraubverbindungen vorgesehen. Trotz eines relativ großen Durchmessers des Filtertellers erlaubt die selbsttragende Gestaltung der Filterzellen eine teilweise Demontage des Filtertellers, ohne dass dieser mit seinen verbliebenden Bestandteilen kollabiert.

Ein besonders effizienter Aufbau ergibt sich nach einer Ausführung dadurch, dass der Filterteller als ein Speichenrad mit einem Rahmen aus Speichen und einem Umfangsring gebildet ist, wobei die Filterzellen als Kreisscheibensegmente eingesetzt sind.

Eine besonders kompakte Anordnung der Filtervorrichtung wird erfindungsgemäß dadurch erreicht, dass der Grundrahmen ringförmig ausgebildet ist und dass der Filterteller über eine Axiallagereinrichtung drehbar auf dem Grundrahmen gelagert ist. Der Grundrahmen und die Axiallagereinrichtung nehmen so die erhebliche axiale Last auf, welche der Filterteller im Betrieb tragen muss. Die Axiallagereinrichtung kann insbesondere ein axiales Wälzlager sein.

Eine weitere bevorzugte Ausführungsform der Erfindung besteht darin, dass der Steuerkopf innerhalb eines ringförmigen Grundrahmens angeordnet ist und eine plattenförmige Oberseite aufweist, welche dicht auf einer korrespondierenden plattenförmigen Unterseite der Tellernabe anliegt. Der Steuerkopf ist drehfest gegenüber der drehbaren Tellernabe und dem Filterteller angeordnet. Die Oberseite des Steuerkopfes und die Unterseite der Tellernabe sind korrespondierend und insbesondere plan ausgebildet, um eine großflächige Dichtfläche zu bilden. Entlang dieser Dichtfläche sind auch die Verbindungsöffnungen für die Kanäle von dem Steuerkopf zu der Tellernabe angeordnet. Diese Kanäle dienen insbesondere zum Abführen von Filtrat aus den einzelnen Filterzellen entsprechend der jeweiligen Drehposition des Filtertellers sowie auch zur Zuführung etwa von Druckluft, um eine auf dem Filtermedium verbliebene Grundschicht von unten abzulösen, insbesondere abzublasen. Entlang des Umlaufweges des Filtertellers können in bekannter Weise neben einer Auftragsstation zum Aufbringen des Filtergutes, der Abtragsstation zum Abführen des Filterkuchens sowie der einen oder mehreren Entfeuchtungsstationen weitere Behandlungsstationen, etwa eine Dampfbehandlungsstation etc., vorgesehen sein.

Nach der Erfindung ist es vorgesehen, dass der Überdruck in dem Druckgehäuse derart eingestellt ist, dass der Steuerkopf auf Grund der Druckdifferenz zwischen dem Druck im Druckgehäuse und dem Druck im Inneren des Steuerkopfes axial gegen die Unterseite der Tellernabe angedrückt ist. Der Steuerkopf weist in seinem Inneren zum Abführen des Filtrates vorzugsweise einen Atmosphärendruck auf, so dass das Filtrat einfach aus dem Steuerkopf und dem Druckgehäuse abführbar und weiterverarbeitbar ist. In bestimmten Fällen kann innerhalb des Steuerkopfes aber auch ein zusätzlicher Unterdruck eingestellt werden, wodurch sich der Differenzdruck und damit die Filtrationsgeschwindigkeit weiter erhöhen würden. In jedem Fall besteht zwischen dem Inneren des Steuerkopfes und der Außenseite ein Druckunterschied, durch welchen der Steuerkopf axiaf nach oben gegen die Unterseite der Tellernabe gedrückt wird. Vorzugsweise ist der Steuerkopf mit radialen Flanschflächen versehen, so dass sich ein entsprechender Anlagedruck ausbilden kann.

Für den Fall einer Betriebsunterbrechung mit einem Abfall des Überdruckes ist es nach einer Weiterbildung der Erfindung vorteilhaft, dass eine Anpresseinrichtung vorgesehen ist, durch welche zur Sicherstellung eines Mindestanpressdruckes der Steuerkopf gegen die Tellernabe bzw. die Tellernabe gegen den Steuerkopf gedrückt ist. Diese Anpresseinrichtung kann insbesondere Druckfedern oder auch Andruckzylinder aufweisen, mit welchen der Steuerkopf axial nach oben gegen die Tellernabe oder die Tellernabe axial nach unten gegen den Steuerkopf gedrückt wird. Die Anpresseinrichtung ist vorzugsweise zwischen dem Steuerkopf und einer Grundplatte oder dem Grundrahmen angeordnet.

Nach einer weiteren Ausführung der Erfindung ist es von Vorteil, dass eine Gegendruckeinrichtung vorgesehen ist, durch welche zur Verminderung einer Anpresskraft, welche auf den Steuerkopf wirkt, eine Gegenkraft auf den Steuerkopf aufbringbar ist.

Bei Einstellung eines relativ hohen Überdruckes kann sich eine sehr hohe Anpresskraft ausbilden, welche den stillstehenden Steuerkopf gegen die drehende Tellernabe drückt. Zur Vermeidung unnötiger Reibungsverluste kann durch die erfindungsgemäß vorgesehene Gegendruckeinrichtung eine Gegenkraft auf dem Steuerkopf aufgebracht werden, durch welche die Anpresskraft in gewünschter Weise vermindert und kompensiert wird. Die Anpresskraft kann dabei so reduziert werden, dass diese für eine ausreichende Dichtigkeit hinreichend groß ist, jedoch übermäßige Reibungsverluste vermieden sind.

Dabei kann es als eine bevorzugte Ausführung der Erfindung vorgesehen sein, dass die Gegendruckeinrichtung eine hydrostatische Druckeinrichtung aufweist, welche zwischen der Tellernabe und dem Steuerkopf angeordnet ist. Dabei können an den Kontaktflächen zwischen dem stillstehenden Steuerkopf und der drehenden Tellernabe taschenförmige Ausnehmungen vorgesehen sein, welche über Fluidkanäle mit einem Druckfluid beaufschlagt werden. Das Fluid kann ein Gas oder eine Flüssigkeit, insbesondere eine Hydraulikflüssigkeit sein. Über eine entsprechende Steuereinrichtung kann der Druck der Gegendruckeinrichtung in gewünschter Weise eingestellt sein. Die hydrostatische Druckeinrichtung hat dabei den zusätzlichen Vorteil, dass diese neben der Druckkompensation auch eine gewisse Reibungsverminderung bewirken kann.

Eine weitere Möglichkeit zum Bilden des Gegendruckes besteht nach einer weiteren Ausführungsvariante der Erfindung darin, dass die Gegendruckeinrichtung mindestens einen Stellzylinder, insbesondere einen Hydraulikzylinder umfasst. Die vorzugsweise mehreren Stellzylinder sind gleichmäßig am Umfang des rohrförmigen Steuerkopfes angeordnet und mit einer Grundplatte oder dem Grundrahmen verbunden. Die Stellzylinder können so den Steuerkopf gegen die Anpresskraft axial nach unten zur Grundplatte ziehen und so diese eine Kompensation der Anpresskraft bewirken.

Nach der Erfindung ist auch ein Filtrationsverfahren vorgesehen, welches mit einer der vorbeschriebenen Filtervorrichtungen durchgeführt wird. Das erfindungsgemäße Filtrationsverfahren ist dadurch gekennzeichnet, dass mittels eines Druckaggregates in dem Druckgehäuse ein Überdruck eingestellt wird. Mit dem Filtrationsverfahren können die vorbeschriebenen Vorteile erzielt werden.

Die Erfindung wird nachfolgend anhand von bevorzugten Ausführungsbeispielen weiter beschrieben, welche schematisch in den beigefügten Zeichnungen gezeigt sind. In den Zeichnungen zeigen:
- Fig. 1: eine perspektivische Teilansicht eines Filtertellers nach der Erfindung;
- Fig. 2: eine Seitenansicht des Filtertellers einer erfindungsgemäßen Filtervorrichtung;
- Fig. 3: eine vergrößerte Teilquerschnittsansicht durch den Grundrahmen einer ersten erfindungsgemäßen Filtervorrichtung;
- Fig. 4: eine Draufsicht auf den Steuerkopf gemäß der Filtervorrichtung von Fig. 3;
- Fig. 5: eine Teilquerschnittsansicht des Grundrahmens einer zweiten erfindungsgemäßen Filtervorrichtung; und
- Fig. 6: eine perspektivische Ansicht eines Steuerkopfes von unten der Filtervorrichtung gemäß Fig. 5.

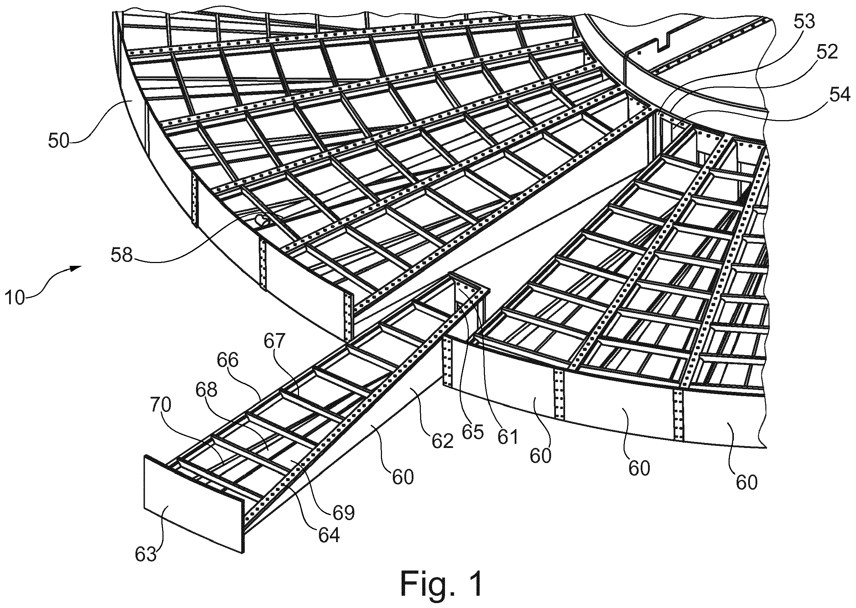

Ein Filterteller 50 einer erfindungsgemäßen Filtervorrichtung 10 ist in Fig. 1 dargestellt. Der Filterteller 50 weist eine Vielzahl von scheibensegmentartigen oder kuchenstückförmigen Filterzellen 60 auf. Im dargestellten Ausführungsbeispiel ist der Filterteller 50 insgesamt durch 36 Filterzellen aufgebaut, welche jeweils ein Winkelsegment von 10° bilden und an einer mittigen Tellernabe befestigt sind.

Eine einzelne Filterzelle 60 weist eine aus Blech gebildete Wanne 62 auf, welche an ihrer radial nach außen weisenden Seite mit einer Rückwand 63 versehen ist. Entlang der radialen Oberkante sind Tragprofile 64 vorgesehen, welche zusammen mit Querstreben 67 ein Traggestell 66 bilden. An der Unterseite dieses Traggestelles 66 ist die Wanne 62 aus Blech befestigt. Die Wanne 62 weist neben Seitenflächen einen Boden 68 auf, welcher radial nach innen hin geneigt ist, um einen Ablauf des Filtrates zu der mittigen Tellernabe 52 zu ermöglichen. Der Boden 68 ist selbst durch schräg gestellte Bodenflächen 69 aufgebaut, so dass radial gerichtete Ablaufrinnen 70 gebildet sind.

Eine radial nach innen gerichtete Stirnseite 61 der Filterzelle 60 ist als ein Befestigungsbereich ausgebildet. Über nicht dargestellte Schraubverbindungen kann die Filterzelle 60 mit dem Befestigungsbereich an der Stirnseite 61 an einem Anschlussflansch 53 an der Außenseite der trommelförmigen Tellernabe 52 lösbar befestigt werden. Der ringförmige Anschlussflansch 53 umgibt eine Einlauföffnung 54. Im befestigten Zustand kann über einen Durchgang 65 in der Stirnseite 61 der Filterzelle 60 Filtrat durch die Einlauföffnung 54 in die zylindrische Tellernabe 52 strömen.

Auf der Oberseite einer Filterzelle 60 ist auf dem Traggestell 66 ein nicht dargestelltes Filtermedium, insbesondere ein Filtertuch, aufgespannt. Auf dem Filtermedium bildet sich während des Filtrationsverfahrens aufgrund des anliegenden Differenzdruckes ein Feststoff- oder Filterkuchen, während Flüssigkeit aus dem Filtergut in das Innere einer Filterzelle 60 gelangt und nach innen zur Tellernabe 52 abläuft.

Jede Filterzelle 60 ist als ein selbsttragendes Element ausgebildet, welches über die Stirnseite 61 mit der Tellernabe 52 und über entsprechende Schraubverbindungen entlang der radialen Tragprofile 64 mit den jeweils angrenzenden Filterzellen 60 verschraubt ist. Durch entsprechendes Lösen der Verbindungseinrichtungen kann eine einzelne Filterzelle 60 oder mehrere Filterzellen 60 etwa zu Wartungszwecken aus dem Filterteller 50 gelöst werden. Über eine Öffnung in dem nicht dargestellten behälterförmigen Druckgehäuse, welches den Filterteller 50 und die jeweiligen Behandlungsstationen auf dem Filterteller 50 druckdicht umgibt, können einzelne Filterzellen 60 ein- und ausgeführt werden.

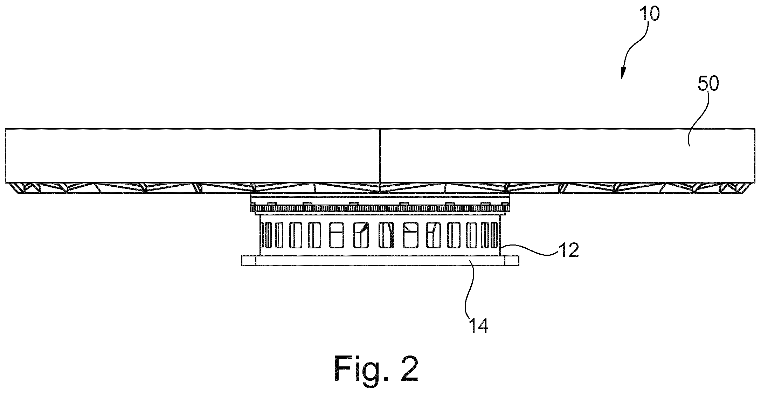

Eine Seitenansicht der erfindungsgemäßen Filtervorrichtung ist in Fig. 2 gezeigt. Der horizontale Filterteller 50 ist drehbar um eine vertikale Drehachse auf einem trommelförmigen Grundrahmen 12 mit einer horizontalen Bodenplatte 14 gelagert. Entlang der Oberseite des Filtertellers 50 befinden sich in bekannter Weise verschiedene Behandlungsstationen, insbesondere eine Auftragsstation zum Aufbringen des zu filtrierenden Filtergutes, eine oder mehrere Entfeuchtungsstationen, an welchen aufgrund des anliegenden Differenzdruckes der eigentliche Filtervorgang durchgeführt wird, sowie eine Abtragsstation, um den verbliebenen Feststoff- oder Filterkuchen von der Oberseite des Filtermediums des Filtertellers 50 abzutragen und aus dem nicht dargestellten Druckgehäuse abzuführen. In dem Druckgehäuse wird ein Überdruck mit einem Druckaggregat, insbesondere einem bekannten Kompressor, eingestellt. Der Überdruck, welcher mehrere bar beträgt, treibt Feuchtigkeit aus dem Haufwerk des aufgebrachten Filtergutes durch das Filtermedium in die Hohlkammern der einzelnen Filterzellen 60, von welchen das Filtrat über die Tellernabe zu einem Steuerkopf 30 abgeleitet wird.

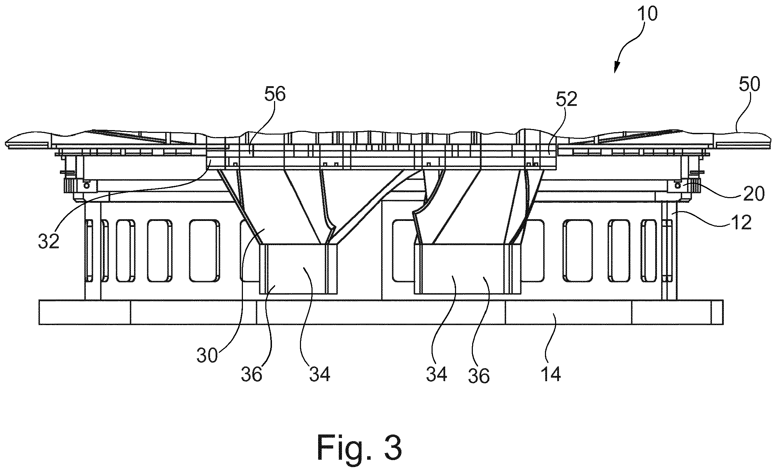

Ein Steuerkopf 30 ist näher in Fig. 3 dargestellt. Der Steuerkopf 30 weist eine plattenförmige Oberseite 32 auf, welche dicht an einer korrespondierenden plattenförmigen Unterseite 56 der Tellernabe 52 des Filtertellers 50 anliegt. Während der Filterteller 50 durch einen nicht dargestellten Drehantrieb drehend um eine vertikale Drehachse angetrieben ist, ist der Steuerkopf 30 wie auch der Grundrahmen 12 drehfest. Der Filterteller 50 ist auf dem trommelförmigen Grundrahmen 12 über eine ringförmige Axiallagereinrichtung 20 axial abgestützt und drehbar gelagert. Der Grundrahmen 12 ist fest mit einer Bodenplatte 14 verbunden, welche ebenfalls innerhalb des nicht dargestellten Druckgehäuses angeordnet ist.

Der Steuerkopf 30 ist drehfest mit dem Grundrahmen 12 verbunden und dreht somit nicht mit dem Filterteller 50 mit. Der Steuerkopf 30 ist mit einer Vielzahl von Kanälen 34 zum Ableiten von Filtrat aus der Tellernabe 52 durch entsprechende Durchgangsöffnungen versehen. Der Steuerkopf 30 ist axial bewegbar zur Tellernabe 52 gelagert. Zu diesem Zweck sind die unteren Ablaufstutzen 36 an den Kanälen 34 des Steuerkopfes 30 über flexible Schlauchverbindungen oder Metallbalgkompensatoren mit nicht dargestellten Ablaufleitungen verbunden, welche nach außerhalb des Druckgehäuses führen.

Innerhalb des Steuerkopfes 30 herrscht vorzugsweise Atmosphärendruck, so dass aufgrund des Überdruckes im Druckgehäuse der Steuerkopf 30 mit seiner Oberseite 32 dicht gegen die korrespondierende Unterseite 56 der Tellernabe 52 gedrückt wird. Hierdurch ist der Innenraum in dem Steuerkopf 30 druckdicht gegenüber dem Außenraum in dem Druckgehäuse abgeschlossen.

Aufgrund des Überdruckes in dem nicht dargestellten Druckgehäuse kann die Anpresskraft auf den Steuerkopf 30 so groß sein, dass aufgrund der Drehbewegung des Filtertellers 50 eine übermäßige Reibung im Bereich der Kontaktfläche zwischen der Oberseite 32 des Steuerkopfes 30 und der Unterseite 56 der Tellernabe 52 auftreten kann.

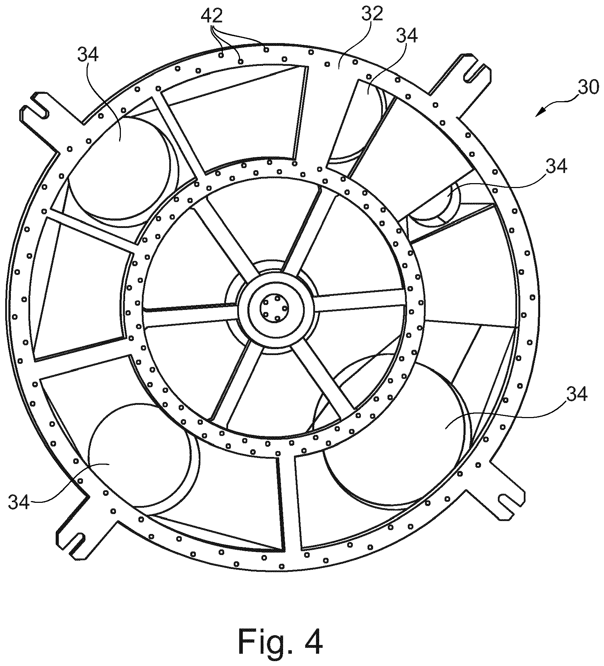

Bei der in Fig. 3 dargestellten Ausführung der Filtervorrichtung 10 ist in dem reibenden Kontaktbereich eine Gegendruckeinrichtung 40 vorgesehen, welche im Zusammenhang mit Fig. 4 näher dargestellt und erläutert ist. Zum Erzeugen eines Gegendruckes sind entlang der Oberseite 32 des Steuerkopfes 30 in der Kontaktfläche zur Tellernabe 52 eine Vielzahl von scheibenförmigen und rinnenförmigen Ausnehmungen 42 eingebracht, welche über nicht dargestellte Kanäle mit einer Hydraulikpumpe der Gegendruckeinrichtung 40 verbunden sind. Über die Pumpe kann ein hydraulischer Druck zwischen der Oberseite 32 des Steuerkopfes 30 und der Unterseite 56 der Tellernabe 52 aufgebaut werden, welcher einer axialen Anpresskraft des Steuerkopfes 30 aufgrund des außenliegenden Überdruckes entgegenwirkt. Bei dieser Ausführung hat die hydrostatische Ausbildung eines Gegendruckes in den ringförmigen Kontaktbereichen zwischen Steuerkopf 30 und Tellernabe 52 auch eine reibungsmindernde Wirkung.

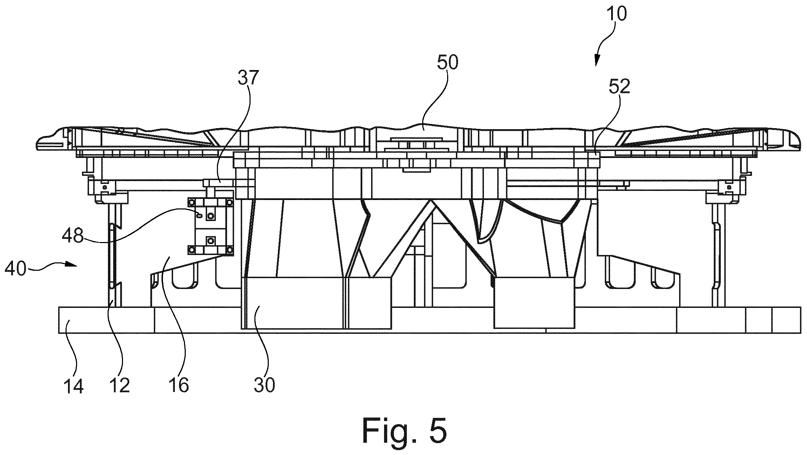

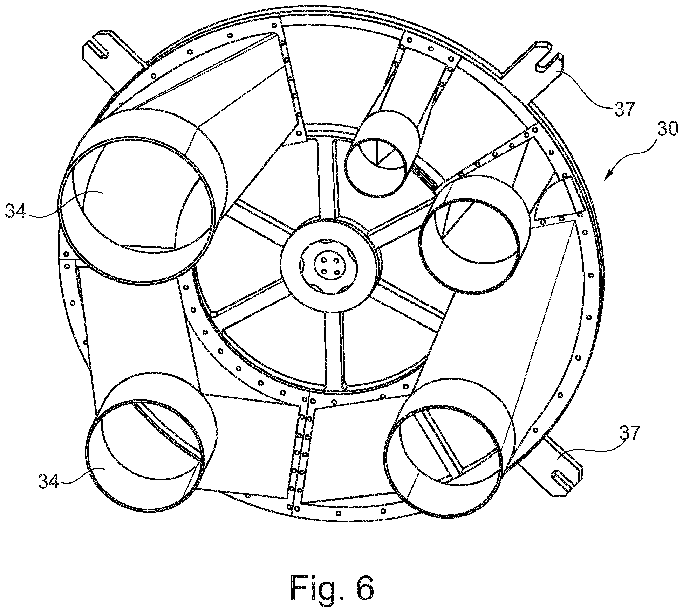

Gemäß den Figuren 5 und 6 ist eine weitere zweite Ausführungsform einer erfindungsgemäßen Filtervorrichtung 10 dargestellt, bei welcher eine geänderte Gegendruckeinrichtung 40 ausgebildet ist. Bei dieser Gegendruckeinrichtung 40 sind ringförmig um den Steuerkopf 30 verteilt mehrere Stellzylinder 48 angeordnet. Ein Stellzylinder 48 ist dabei an seiner Oberseite mit radialen Haltebügeln 37 des Steuerkopfes 30 verbunden. Ein unterer Teil des Stellzylinders 48 ist über balkenförmige Stützen 16 fest mit dem Grundrahmen 12 und der Bodenplatte 14 verbunden. Über eine Steuereinrichtung können die hydraulischen Stellzylinder 48 so eingestellt werden, dass diese entgegen der nach oben gerichteten axialen Anpresskraft den Steuerkopf 30 axial nach unten ziehen, so dass die Anpresskraft vermindert und in einem gewünschten Ausmaß kompensiert wird. Mit der Gegendruckeinrichtung 40 kann die erfindungsgemäße Filtervorrichtung 10 mit einem horizontal gerichteten drehenden Filterteller 50 in einem Druckgehäuse mit Überdruck betrieben werden. Bei Ausfall des Überdruckes können die Stellzylinder 48 auch dazu dienen, eine notwendige Mindestanpresskraft des Steuerkopfes 30 an die Tellernabe 52 sicherzustellen.

## Patentansprüche

1. Filtervorrichtung mit
- einem Grundrahmen (12),
- einem im Wesentlichen horizontalen, scheibenförmigen Filterteller (50), welcher
-- drehend antreibbar auf dem Grundrahmen (12) gelagert ist,
-- eine Vielzahl von scheibensegmentförmigen Filterzellen (60) und
-- eine Tellernabe (52) aufweist, an welcher die Filterzellen (60) zum Ableiten von Filtrat an Einlauföffnungen (54) der Tellernabe (52) angeschlossen sind,
- einem Steuerkopf (30), welcher mit Kanälen (34) zum Abführen von Filtrat aus der Tellernabe (52) versehen ist, wobei der Steuerkopf (30) drehfest und axial bewegbar unterhalb der Tellernabe (52) angeordnet ist und dicht an einer Unterseite (56) der Tellernabe (52) anliegt, und
- einem Druckgehäuse,
**dadurch gekennzeichnet,**
- **dass** das Druckgehäuse den Filterteller (50) und den Steuerkopf (30) druckdicht umschließt,
- **dass** ein Druckaggregat vorgesehen ist, mit welchem in dem Druckgehäuse ein Überdruck einstellbar ist, und
- **dass** der Überdruck in dem Druckgehäuse derart einstellbar ist, dass der Steuerkopf (30) axial gegen die Unterseite (56) der Tellernabe (52) angedrückt ist.

2. Filtervorrichtung nach Anspruch 1,
**dadurch gekennzeichnet,**
**dass** die Filterzellen (60) für eine Einzelmontage selbsttragend ausgebildet und leicht lösbar an der Tellernabe (52) befestigt sind.

3. Filtervorrichtung nach Anspruch 1 oder 2,
**dadurch gekennzeichnet,**
**dass** die Filterzellen (60) wannenförmig ausgebildet sind und entlang ihrer oberen radialen Umfangskante Tragprofile (64) aufweisen.

4. Filtervorrichtung nach einem der Ansprüche 1 bis 3,
**dadurch gekennzeichnet,**
**dass** die Filterzellen (60) einen zur Tellernabe (52) geneigten Boden (68) aufweisen, welcher zum Bilden wenigstens einer Ablaufrinne (70) im Querschnitt in Umfangsrichtung geneigte Bodenflächen (69) aufweist.

5. Filtervorrichtung nach einem der Ansprüche 1 bis 4,
**dadurch gekennzeichnet,**
**dass** mindestens 24 Filterzellen (60), vorzugsweise 36 Filterzellen (60), zum Bilden des Filtertellers (50) vorgesehen sind.

6. Filtervorrichtung nach einem der Ansprüche 1 bis 5,
**dadurch gekennzeichnet,**
**dass** das Druckgehäuse mindestens eine druckdicht verschließbare Öffnung aufweist, durch welche einzelne Filterzellen (60) ein- und ausführbar sind.

7. Filtervorrichtung nach Anspruch 6,
dadurch gekennzeichen,
dass das Druckgehäuse etwa zylindrisch, mit einer trommelförmigen Umfangswand, einem Boden und einer Decke ausgebildet ist, und
dass in dem Boden und/oder der Decke die druckdicht verschließbare Öffnung angeordnet ist.

8. Filtervorrichtung nach einem der Ansprüche 1 bis 7,
**dadurch gekennzeichnet,**
**dass** der Filterteller (50) als ein Speichenrad mit einem Rahmen aus Speichen und einem Umfangsring gebildet ist, wobei die Filterzellen (60) als Kreisscheibensegmente eingesetzt sind.

9. Filtervorrichtung nach einem der Ansprüche 1 bis 8,
**dadurch gekennzeichnet,**
**dass** der Steuerkopf (30) innerhalb eines ringförmigen Grundrahmens (12) angeordnet ist und eine plattenförmige Oberseite (32) aufweist, welche dicht auf einer korrespondierenden plattenförmigen Unterseite (56) der Tellernabe (52) anliegt.

10. Filtervorrichtung nach einem der Ansprüche 1 bis 9,
**dadurch gekennzeichnet,**
**dass** eine Anpresseinrichtung vorgesehen ist, durch welche zur Sicherstellung eines Mindestanpressdruckes der Steuerkopf (30) gegen die Tellernabe (52) gedrückt ist.

11. Filtervorrichtung nach einem der Ansprüche 1 bis 10,
**dadurch gekennzeichnet,**
**dass** eine Gegendruckeinrichtung vorgesehen ist, durch welche zur Verminderung einer Anpresskraft, welche auf den Steuerkopf (30) wirkt, eine Gegenkraft auf den Steuerkopf (30) aufbringbar ist.

12. Filtervorrichtung nach Anspruch 11,
**dadurch gekennzeichnet,**
**dass** die Gegendruckeinrichtung (40) eine hydrostatische Druckeinrichtung aufweist, welche zwischen der Tellernabe (52) und dem Steuerkopf (30) angeordnet ist.

13. Filtervorrichtung nach Anspruch 11 oder 12,
**dadurch gekennzeichnet,**
**dass** die Gegendruckeinrichtung (40) mindestens einen Stellzylinder (48), insbesondere einen Hydraulikzylinder, umfasst.

14. Filtrationsverfahren, welches mit einer Filtervorrichtung (10) nach einem der Ansprüche 1 bis 12 durchgeführt wird,
**dadurch gekennzeichnet,**
**dass** mittels eines Druckaggregates in dem Druckgehäuse ein Überdruck eingestellt wird, wobei der Steuerkopf (30) axial gegen die Unterseite (56) der Tellernabe (52) angedrückt wird.

## Claims

1. Filter device with
- a base frame (12),
- a substantially horizontal, disk-shaped filter pan (50),which
-- is supported on the base frame (12) such that it can be driven in a rotating manner,
-- has a plurality of disk-segment-shaped filter cells (60) and
-- a pan hub (52), on which the filter cells (60) are connected to inlet openings (54) of the pan hub (52) in order to drain off filtrate,
- a control head (30) which is provided with channels (34) for discharging filtrate from the pan hub (52), wherein the control head (30) is arranged in a torqueproof and axially movable manner below the pan hub (52) and rests in a sealed manner against an underside (56) of the pan hub (52), and
- a pressure housing,
**characterized in that**
- the pressure housing encloses the filter pan (50) and the control head (30) in a pressure-sealed manner,
- **in that** a pressure unit is provided, with which an overpressure can be set in the pressure housing, and
- **in that** the overpressure in the pressure housing can be set such that the control head (30) is pressed axially against the underside (56) of the pan hub (52).

2. Filter device according to claim 1,
**characterized in that**
for individual installation the filter cells (60) are of self-supporting design and fixed on the pan hub (52) in an easily releasable manner.

3. Filter device according to claim 1 or 2,
**characterized in that**
the filter cells (60) are of trough-shaped design and have support profiles (64) along their upper radial circumferential edge.

4. Filter device according to any one of claims 1 to 3,
**characterized in that**
the filter cells (60) have a bottom (68) which is inclined towards the pan hub (52) and which, for the purpose of forming at least one drain groove (70), has bottom surfaces (69) that are inclined in cross section in the circumferential direction.

5. Filter device according to any one of claims 1 to 4,
**characterized in that**
at least 24 filter cells (60), by preference 36 filter cells (60), are provided for forming the filter pan (50).

6. Filter device according to any one of claims 1 to 5,
**characterized in that**
the pressure housing has at least one opening which is closable in a pressure-sealed manner and through which individual filter cells (60) can be introduced and removed.

7. Filter device according to claim 6,
**characterized in that**
the pressure housing is of approximately cylindrical design, with a drum-shaped circumferential wall, a bottom and a ceiling, and
**in that** in the bottom and/or the ceiling the opening which is closable in a pressure-sealed manner is arranged.

8. Filter device according to any one of claims 1 to 7,
**characterized in that**
the filter pan (50) is formed as a spoke wheel with a frame consisting of spokes and a circumferential ring, wherein the filter cells (60) are inserted as circular disk segments.

9. Filter device according to any one of claims 1 to 8,
**characterized in that**
the control head (30) is arranged within a ring-shaped base frame (12) and has a plate-shaped upper side (32) which rests in a sealed manner against a corresponding plate-shaped underside (56) of the pan hub (52).

10. Filter device according to any one of claims 1 to 9,
**characterized in that**
a pressing means is provided, through which the control head (30) is pressed against the pan hub (52) in order to ensure a minimum contact pressure.

11. Filter device according to claim 1 to 10,
**characterized in that**
a counter-pressure means is provided, through which a counterforce can be applied to the control head (30) in order to reduce a contact force acting on the control head (30).

12. Filter device according to claim 11,
**characterized in that**
the counter-pressure means (40) has a hydrostatic pressure means which is arranged between the pan hub (52) and the control head (30).

13. Filter device according to claim 11 or 12,
**characterized in that**
the counter-pressure means (40) comprises at least one positioning cylinder (48), in particular a hydraulic cylinder.

14. Filtration method carried out with a filter device (10) according to any one of claims 1 to 12,
**characterized in that**
by means of a pressure unit an overpressure is set in the pressure housing, wherein the control head (30) is pressed axially against the underside (56) of the pan hub (52).

## Revendications

1. Dispositif de filtre comprenant
- un châssis de base (12),
- un plateau de filtre (50) sensiblement horizontal, en forme de disque, lequel
-- est monté de manière à pouvoir être entraîné en rotation sur le châssis de base (12),
-- présente une pluralité de cellules de filtre (60) en forme de segment de disque et
-- un moyeu de plateau (52), au niveau duquel les cellules de filtre (60) sont raccordées afin de dévier un filtrat au niveau d'ouvertures d'admission (54) du moyeu de plateau (52),
- une tête de commande (30), qui est pourvue de canaux (34) servant à évacuer un filtrat du moyeu de plateau (52), la tête de commande (30) étant disposée de manière solidaire en rotation et de manière à pouvoir être déplacée axialement sous le moyeu de plateau (52) et repose à proximité immédiate au niveau d'un côté inférieur (56) du moyeu de plateau (52), et
- un boîtier de pression,
**caractérisé en ce**
- **que** le boîtier de pression renferme de manière étanche à la pression le plateau de filtre (50) et la tête de commande (30),
- **qu'**une unité de pression est prévue, avec laquelle une surpression peut être réglée dans le boîtier de pression, et
- **que** la surpression dans le boîtier de pression peut être réglée de telle manière que la tête de commande (30) est pressée axialement contre le côté inférieur (56) du moyeu de plateau (52).

2. Dispositif de filtre selon la revendication 1,
**caractérisé en ce**
**que** les cellules de filtre (60) sont réalisées de manière autoporteuse pour un montage individuel et sont fixées de manière facilement amovible au niveau du moyeu de plateau (52).

3. Dispositif de filtre selon la revendication 1 ou 2,
**caractérisé en ce**
**que** les cellules de filtre (60) sont réalisées de manière à présenter une forme de cuvette et présentent le long de leur arête périphérique radiale des profils porteurs (64).

4. Dispositif de filtre selon l'une des revendications 1 à 3,
**caractérisé en ce**
**que** les cellules de filtre (60) présentent un fond (68) incliné en direction du moyeu de plateau (52), lequel présente des surfaces de fond (69) inclinées dans la direction périphérique afin de former au moins un sillon d'évacuation (70) dans la section transversale.

5. Dispositif de filtre selon l'une des revendications 1 à 4,
**caractérisé en ce**
**qu'**au moins 24 cellules de filtre (60), de préférence 36 cellules de filtre (60), sont prévues afin de former le plateau de filtre (50).

6. Dispositif de filtre selon l'une des revendications 1 à 5,
**caractérisé en ce**
**que** le boîtier de pression présente au moins une ouverture pouvant être fermée de manière étanche à la pression, par laquelle diverses cellules de filtre (60) peuvent être introduites et sorties.

7. Dispositif de filtre selon la revendication 6,
**caractérisé en ce**
**que** le boîtier de pression est réalisé approximativement de manière cylindrique, avec une paroi périphérique en forme de tambour, un fond et un couvercle, et
**que** l'ouverture pouvant être fermée de manière étanche à la pression est disposée dans le fond et/ou dans le couvercle.

8. Dispositif de filtre selon l'une des revendications 1 à 7,
**caractérisé en ce**
**que** le plateau de filtre (50) est réalisé sous la forme d'une roue à rayons comprenant un châssis formé de rayons et d'un anneau périphérique, dans lequel les cellules de filtre (60) sont utilisées en tant que segments de disque de cercle.

9. Dispositif de filtre selon l'une des revendications 1 à 8,
**caractérisé en ce**
**que** la tête de commande (30) est disposée à l'intérieur d'un châssis de base (12) de forme annulaire et présente un côté supérieur (32) en forme de plaque, qui repose à proximité immédiate sur un côté inférieur (56) correspondant en forme de plaque du moyeu de plateau (52).

10. Dispositif de filtre selon l'une des revendications 1 à 9,
**caractérisé en ce**
**qu'**un système de compression est prévu, par lequel la tête de commande (30) est pressée contre le moyeu de plateau (52) afin de garantir une pression de compression minimale.

11. Dispositif de filtre selon l'une des revendications 1 à 10,
**caractérisé en ce**
**qu'**un système de contre-pression est prévu, par lequel une contre-force qui agit sur la tête de commande (30) peut être appliquée sur la tête de commande (30) afin de réduire une force de compression.

12. Dispositif de filtre selon la revendication 11,
**caractérisé en ce**
**que** le système de contre-pression (40) présente un système de pression hydrostatique, qui est disposé entre le moyeu de plateau (52) et la tête de commande (30).

13. Dispositif de filtre selon la revendication 11 ou 12,
**caractérisé en ce**
**que** le système de contre-pression (40) comprend au moins un vérin de réglage (48), en particulier un vérin hydraulique.

14. Procédé de filtration, qui est mis en oeuvre avec un dispositif de filtre (10) selon l'une des revendications 1 à 12,
**caractérisé en ce**
**qu'**une surpression est réglée dans le boîtier de pression au moyen d'une unité de pression, dans lequel la tête de commande (30) est compressée axialement contre le côté inférieur (56) du moyeu de plateau (52).
